# FASCICULE DE BREVET EUROPEEN

(11) **EP 4 054 860 B1**
(45) Date de publication et mention de la délivrance du brevet: **28.05.2025**
(21) Numéro de dépôt: 20816285.9
(22) Date de dépôt: 06.11.2020
(51) Int. Cl.: B60C 11/03, B60C 11/12, B60C 11/13

(54) **PNEUMATIQUE COMPORTANT UNE BANDE DE ROULEMENT**
REIFEN MIT EINER LAUFFLÄCHE
TIRE COMPRISING A TREAD

(30) Priorité: 06.11.2019 FR 1912448
(43) Date de publication de la demande: 14.09.2022
(73) Titulaire: COMPAGNIE GENERALE DES ETABLISSEMENTS MICHELIN, 63000 Clermont-Ferrand (FR)
(72) Inventeur: BOISDON, Bertrand, 63040 CLERMONT-FERRAND Cedex 9 (FR); LABROUSSE, Jerome, 63040 CLERMONT-FERRAND Cedex 9 (FR); VANTAL, Marie-Hélène, 63040 CLERMONT-FERRAND Cedex 9 (FR)
(74) Mandataire: M.F.P. Michelin
(86) Numéro de dépôt international: PCT/FR2020/052026
(87) Numéro de publication internationale: WO 2021/089964

(56) Documents cités:
- EP-A1- 2 311 661
- EP-A1- 3 261 857
- EP-A1- 3 377 340

## Description

### Domaine technique

La présente invention concerne un pneumatique pour véhicule automobile dit pneumatique « quatre saisons ». L'invention est plus particulièrement adaptée pour un pneumatique destiné à équiper un véhicule de tourisme ou une camionnette.

### Technique antérieure

De manière connue, un pneumatique dit quatre saisons est un pneumatique qui présente un excellent compromis d'adhérence sur sol enneigé/sol mouillé tout en préservant les performances sur sol sec. Ces pneumatiques ont pour objectif de rouler en sécurité toute l'année quelle que soit la météo. Ils ont généralement reçu la certification hiver 3PMSF (pour 3 Peak Mountain Snow Flake) attestant de leurs excellentes performances sur sol enneigé et sur sol mouillé. Cette certification est notamment indiquée sur l'un ou les deux flancs de ces types de pneumatiques.

Le document WO2016/134988 divulgue un pneumatique quatre saisons présentant une bande de roulement comportant deux bords et un centre. Ladite bande de roulement est directionnelle et elle comporte une pluralité d'ensemble de blocs en matériau caoutchoutique. Chaque ensemble de blocs comprend un seul bloc qui s'étend d'un bord de la bande de roulement jusqu'au centre de ladite bande de roulement. Plus particulièrement, le bloc présente une zone centrale s'étendant globalement selon un angle β1, ledit angle β1 étant au moins supérieur à 35 degrés et au plus inférieur à 65 degrés avec une direction axiale. Le bloc comporte également une zone de bord s'étendant globalement selon un angle β3 au moins supérieur à 0 degré et au plus inférieur à 10 degrés avec ladite direction axiale. Enfin, le bloc comporte une zone intermédiaire entre la zone centrale et la zone de bord du bloc, ladite zone intermédiaire faisant un angle β2 avec ladite direction axiale.

Le document WO2019/123277 divulgue un pneumatique quatre saisons comportant une pluralité d'ensembles de bloc. Chaque ensemble de blocs comprend ici trois blocs séparés par des rainures obliques et formant un bloc de bord, un bloc central et un bloc intermédiaire entre le bloc de bord et le bloc central. Seul le bloc de bord comprend ici un chanfrein positionné sur une face d'attaque de ce bloc de bord.

Le document EP2311661 A1 divulgue une sculpture de bande de roulement comprenant une pluralité de blocs orientés dans l'objectif d'améliorer la stabilité de direction des véhicules équipés de ces pneumatiques, sans dégrader la circulation de l'eau entre les blocs de sculptures. Le document EP3261857A1 divulgue également une sculpture de bande de roulement comprenant des blocs avec des arêtes chanfreinés, mais les blocs de la portion centrale de la bande de roulement en sont dépourvus.

Il existe un besoin constant d'améliorer les performances des pneumatiques quatre saisons tant sur le compromis d'adhérence entre un sol enneigé et un sol mouillé que pour l'adhérence sur sol sec.

### Exposé de l'invention

La présente invention vise à remédier au moins en partie à ce besoin.

Plus particulièrement, la présente invention vise à améliorer le compromis d'adhérence sur sol enneigé/sol mouillé pour un pneumatique quatre saisons tout en améliorant les performances d'adhérence sur sol sec.

L'invention concerne un pneumatique ayant une certification hiver 3PMSF, ladite certification étant indiquée sur un flanc du pneumatique, ledit pneumatique comportant une bande de roulement.

Par « pneumatique », on entend tous les types de bandage en matériau caoutchoutique soumis en roulage à une pression interne ou non soumis à une telle pression interne en roulage (c'est le cas d'un bandage sans air comprimé, par exemple, de type Tweel^{™}).

Plus particulièrement, l'invention concerne un pneumatique comportant une bande de roulement directionnelle de largeur W.

La bande de roulement comporte deux bords et un centre C. Les bords délimitent des frontières avec cette bande de roulement et deux flancs. Le centre C divise la bande de roulement en deux parties de largeur sensiblement égale. La bande de roulement comporte sur une de ses deux parties une pluralité d'ensembles de bloc(s) se succédant selon une direction circonférentielle.

Par « direction circonférentielle », on entend une direction qui est tangente à tout cercle centré sur l'axe de rotation. Cette direction est perpendiculaire à la fois à une direction axiale et à une direction radiale.

Par « direction axiale », on entend une direction parallèle à l'axe de rotation du pneumatique.

Par « direction radiale », on entend une direction qui est perpendiculaire à l'axe de rotation du pneumatique (cette direction correspond à la direction de l'épaisseur de la bande de roulement au centre de ladite bande de roulement).

Chaque ensemble de bloc(s) comporte au moins un bloc. Par « bloc », on entend un élément en relief délimité par des rainures et comprenant des parois latérales et une face de contact, cette dernière étant destinée à venir en contact avec un sol pendant le roulage. Dans le cas où l'ensemble de bloc(s) ne comporte qu'un seul bloc, ledit ensemble de bloc(s) et ledit bloc sont confondus.

Par « rainure », on entend une entaille dont la distance entre les parois de matière qui délimitent ladite rainure est supérieure à 2 mm et dont la profondeur est supérieure ou égale à 1 mm.

Par « incision », on entend une entaille dont la distance entre les parois de matière qui délimitent ladite incision est inférieure ou égale à 2 mm et dont la profondeur est supérieure ou égale à 1 mm.

Chaque ensemble de bloc(s) s'étend d'un des bords de la bande de roulement vers le centre de ladite bande de roulement selon une certaine courbure non nulle. Les ensembles de bloc(s) ainsi courbés définissent le caractère directionnel de la bande de roulement.

Chaque ensemble de bloc(s) comprend une zone de bord à proximité d'un bord de la bande de roulement, une zone centrale à proximité du centre de la dite bande de roulement et une zone intermédiaire entre la zone centrale et la zone de bord. Chaque ensemble de bloc(s) comporte un ensemble de chanfrein(s) comprenant au moins un chanfrein, ledit ensemble de chanfrein(s) s'étendant au moins sur la zone de bord et la zone centrale de l'ensemble de bloc(s). Le ou chaque chanfrein forme un plan incliné s'étendant entre un premier point correspondant à l'intersection entre le chanfrein et une surface de roulement du pneumatique et un second point correspondant à l'intersection entre le chanfrein et une paroi latérale délimitant la zone de bord, la zone centrale et la zone intermédiaire de l'ensemble de bloc(s).

Par « ensemble de chanfrein(s) », on entend un ensemble comportant un ou plusieurs chanfreins, le ou les chanfreins s'étendant sur une même face latérale de l'ensemble de bloc(s). Si l'ensemble de bloc(s) comprend uniquement un seul bloc, l'ensemble de chanfrein(s) comprend alors un seul chanfrein s'étendant sur une face latérale du bloc. Si l'ensemble de bloc(s) comprend plusieurs blocs, l'ensemble de chanfrein(s) comprend au moins deux chanfreins s'étendant sur deux faces latérales de deux blocs. Ces faces latérales appartiennent à la même face latérale de l'ensemble de bloc(s), c'est-à-dire qu'elles sont située du même côté par rapport à l'ensemble de bloc(s).

Par « chanfrein », on entend une paroi inclinée qui s'étend de la surface de roulement de la bande de roulement en direction d'un fond de la rainure délimitant la paroi. L'inclinaison de la paroi est telle que le bloc s'élargie en direction du fond de cette rainure. Chaque chanfrein comprend une hauteur de chanfrein et une largeur de chanfrein. La hauteur de chanfrein correspond à la distance entre la surface de roulement de la bande de roulement et le point le plus radialement intérieur du chanfrein dans la rainure. Cette distance est mesurée selon la direction radiale. La largeur du chanfrein correspond à la distance entre le point le plus radialement extérieur du chanfrein et le point le plus radialement intérieur de ce chanfrein dans la rainure, projetée sur la surface de roulement de la bande de roulement. Cette distance est mesurée selon la direction circonférentielle.

Par « surface de roulement » de bande de roulement, on entend la surface qui regroupe l'ensemble des points du pneumatique qui vont entrer en contact avec un sol dans des conditions usuelles de roulage. Ces points qui vont entrer en contact avec le sol appartiennent aux faces de contact des blocs. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et à son code vitesse. Ces conditions d'utilisation peuvent aussi être dites « conditions nominales » ou « conditions d'usage ».

La largeur de l'ensemble de chanfrein(s) sur la zone de bord est différente de la largeur de l'ensemble de chanfrein(s) sur la zone intermédiaire, lesdites largeurs étant comprises entre 0,5 mm et 2,5 mm.

Le chanfrein améliore localement la rigidité de l'ensemble de bloc(s) ce qui permet d'augmenter l'adhérence de ce pneumatique sur un sol sec. Cette adhérence est particulièrement améliorée sur la zone de bord de l'ensemble de bloc(s) qui a une extension principalement selon la direction axiale. La zone de bord, la zone intermédiaire et la zone centrale de l'ensemble de bloc(s) ont des directions d'extension différentes. En outre ces zones peuvent avoir des largeurs différentes. En augmentant les zones de l'ensemble de bloc(s) bénéficiant d'un chanfrein et en adaptant la largeur de ce chanfrein à la largeur locale de l'ensemble de bloc(s) et/ou à la direction d'extension locale de cet ensemble de bloc(s), on optimise l'adhérence du pneumatique sur un sol sec.

Préférentiellement, la largeur de l'ensemble de chanfrein(s) sur la zone intermédiaire est supérieure à la largeur de l'ensemble de chanfrein(s) sur la zone de bord.

Préférentiellement, la différence de largeur de l'ensemble de chanfrein(s) entre la zone intermédiaire et la zone de bord est d'au moins 0,3 mm.

Préférentiellement, l'ensemble de chanfrein(s) s'étend dans la zone centrale de l'ensemble de bloc(s) avec une largeur prédéterminée.

Préférentiellement, la largeur de l'ensemble de chanfrein(s) dans la zone intermédiaire est supérieure à la largeur de l'ensemble de chanfrein(s) dans la zone de bord et à la largeur de l'ensemble de chanfrein(s) dans la zone centrale.

Préférentiellement, l'ensemble de bloc(s) comprenant une face d'attaque et une face de fuite et ledit ensemble de chanfrein(s) s'étend au niveau de la face d'attaque dudit ensemble de bloc(s).

Par « face d'attaque » de l'ensemble de bloc(s), on entend la face dudit ensemble de bloc(s) qui entre la première dans l'aire de contact, dans un sens de roulement préférentiel du pneumatique. La face d'attaque de l'ensemble de bloc(s) s'étend uniquement sur une même côté de l'ensemble de bloc(s). Ainsi, si l'ensemble de bloc(s) comprend seulement un bloc, la face d'attaque de l'ensemble de bloc(s) s'étend une paroi latérale de ce bloc. Si l'ensemble de bloc(s) comprend plusieurs blocs, la face d'attaque de l'ensemble de bloc(s) s'étend sur plusieurs parois latérales de différents blocs.

Par « face de fuite » de l'ensemble de bloc(s), on entend la face dudit ensemble de bloc(s) qui sort la dernière de l'aire de contact, dans un sens de roulement préférentiel du pneumatique. La face de fuite de l'ensemble de bloc(s) s'étend uniquement sur un même côté de l'ensemble de bloc(s). Ainsi, si l'ensemble de bloc(s) comprend seulement un bloc, la face de fuite l'ensemble de bloc(s) s'étend une paroi latérale de ce bloc. Si l'ensemble de bloc(s) comprend plusieurs blocs, la face de fuite de l'ensemble de bloc(s) s'étend sur plusieurs parois latérales de différents blocs.

Préférentiellement, l'ensemble de bloc(s) comprend un autre ensemble de chanfrein(s) s'étendant au niveau de la face de fuite dudit ensemble de bloc(s).

Préférentiellement, l'ensemble de bloc(s) comprend une incision s'étendant dans la longueur de l'ensemble de bloc(s), ladite incision étant au moins en partie chanfreinée.

Dans un autre mode de réalisation de l'invention, l'ensemble de blocs comprend au moins trois blocs, un premier bloc dit bloc de bord à proximité du bord de la bande de roulement, un second bloc dit bloc central à proximité de la zone centrale, et un troisième bloc dit bloc intermédiaire disposé entre le bloc de bord et le bloc central et dans lequel l'ensemble de blocs comprend un ensemble de chanfreins comprenant au moins trois chanfreins, un premier chanfrein dit chanfrein de bord de largeur s'étendant dans le bloc de bord, un second chanfrein dit chanfrein central s'étendant dans le bloc central, un troisième chanfrein dit chanfrein intermédiaire s'étendant dans le bloc intermédiaire. La largeur du chanfrein de bord étant différente de la largeur du chanfrein intermédiaire, et la largeur du chanfrein central étant différente de la largeur du chanfrein intermédiaire, lesdites largeurs étant comprises entre 0,5 mm et 2,5 mm. La largeur de l'ensemble de chanfreins dans la zone intermédiaire est supérieure à la largeur de l'ensemble de chanfreins dans la zone de bord et également supérieure à la largeur de l'ensemble de chanfreins dans la zone centrale.

La composition du matériau caoutchoutique des blocs a une température de transition vitreuse Tg comprise entre -40°C et -10°C et préférentiellement entre -35°C et -15°C et un module complexe de cisaillement dynamique G* mesuré à 60°C compris entre 0,5 MPa et 2 MPa, et préférentiellement entre 0,7 MPa et 1,5 MPa.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est-à-dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G'', et la perte dynamique tgδ, égale au rapport G"/G'. La température de transition vitreuse Tg est la température à laquelle la perte dynamique tgδ atteint un maximum lors du balayage en température. La valeur de G* mesurée à 60°C est représentative de la rigidité du matériau caoutchoutique, c'est-à-dire de sa résistance à la déformation élastique.

Cette composition du matériau caoutchoutique permet d'améliorer les performances d'adhérence sur un sol enneigé/humide. Comme ce matériau est globalement moins rigide, l'ensemble de chanfrein(s) sur l'ensemble de bloc(s) permet de rigidifier localement la rigidité de l'ensemble de bloc(s) ce qui améliore, notamment, les performances d'adhérence sur un sol sec. On optimise ainsi l'équilibre des performances entre un sol enneigé/humide et entre un sol sec.

La présente invention sera mieux comprise à la lecture de la description détaillée de modes de réalisation pris à titre d'exemples nullement limitatifs et illustrés par les dessins annexés sur lesquels :
La figure 1 est une vue schématique en perspective d'un pneumatique selon l'art antérieur ;
La figure 2 est vue schématique en perspective d'une coupe partielle d'un pneumatique selon un autre art antérieur ;
La figure 3 est une vue de détail partielle d'une bande de roulement à l'état neuf d'un pneumatique conforme à un premier mode de réalisation de l'invention ;
La figure 4 est une vue agrandie d'un ensemble de blocs de la bande de roulement de la figure 3 ;
La figure 5 est une vue en coupe du bloc de la figure 4 selon un plan de coupe A-A ;
La figure 6 est une vue en coupe du bloc de la figure 4 selon un plan de coupe B-B ;
La figure 7 est une vue en coupe du bloc de la figure 4 selon un plan de coupe C-C ;
La figure 8 est une vue de détail partielle d'une bande de roulement à l'état neuf d'un pneumatique conforme à un second mode de réalisation de l'invention.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

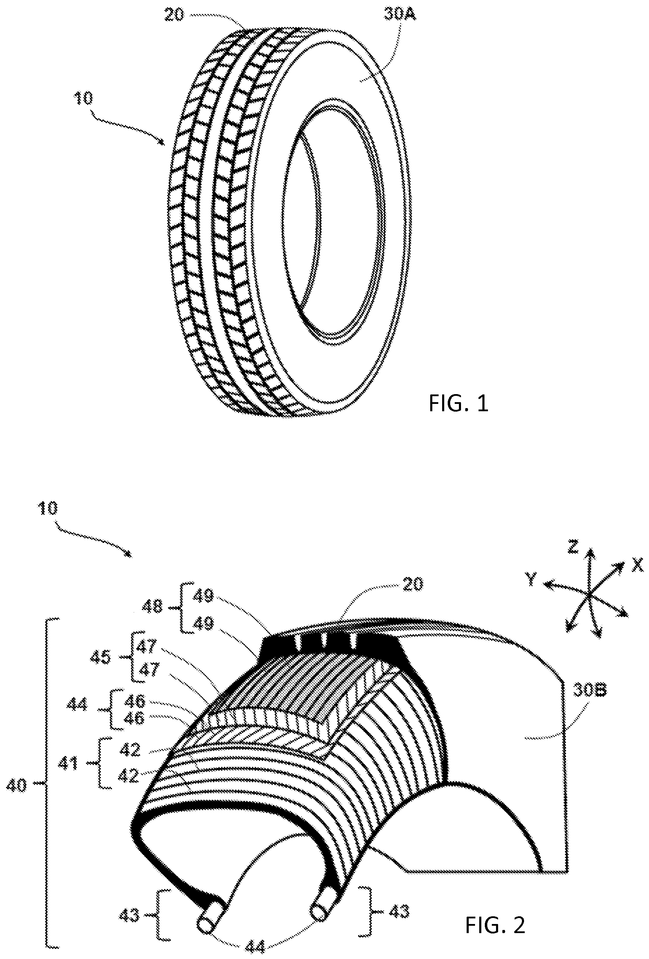

La figure 1 représente schématiquement un pneumatique 10 selon l'art antérieur. Ce pneumatique 10 comporte une bande de roulement 20 et deux flancs 30A, 30B (dont un seul est ici représenté), ladite bande de roulement 20 et lesdits flancs 30A, 30B recouvrant une carcasse 40 (non représentée sur la figure 1). La figure 2 détaille plus particulièrement la carcasse 40 d'un pneumatique 10 conforme à l'art antérieur. Cette carcasse 40 comprend ainsi une armature de carcasse 41 constituée de fils enrobés 42 de composition caoutchouteuse, et deux bourrelets 43 comportant chacun des armatures de renforcement circonférentielles 44 (ici, des tringles) qui maintiennent le pneumatique 10 sur une jante (non représentée). L'armature de carcasse 41 est ancrée dans chacun des bourrelets 43. La carcasse 40 comporte en outre une armature de sommet comprenant deux nappes de travail 44 et 45. Chacune des nappes de travail 44 et 45 est renforcée par des éléments de renforcement 46 et 47 filaires qui sont parallèles dans chaque couche et croisés d'une couche à l'autre, en faisant avec la direction circonférentielle X des angles compris entre 10° et 70°.

Le pneumatique comporte en outre une armature de frettage 48, disposée radialement à l'extérieur de l'armature de sommet. Cette armature de frettage 48 est formée d'éléments de renforcement 49 orientés circonférentiellement et enroulés en spirale. Le pneumatique 10 représenté sur la figure 2 est un pneu « tubeless ». Il comprend une gomme intérieure en composition caoutchouteuse imperméable au gaz de gonflage et recouvrant la surface intérieure du pneumatique.

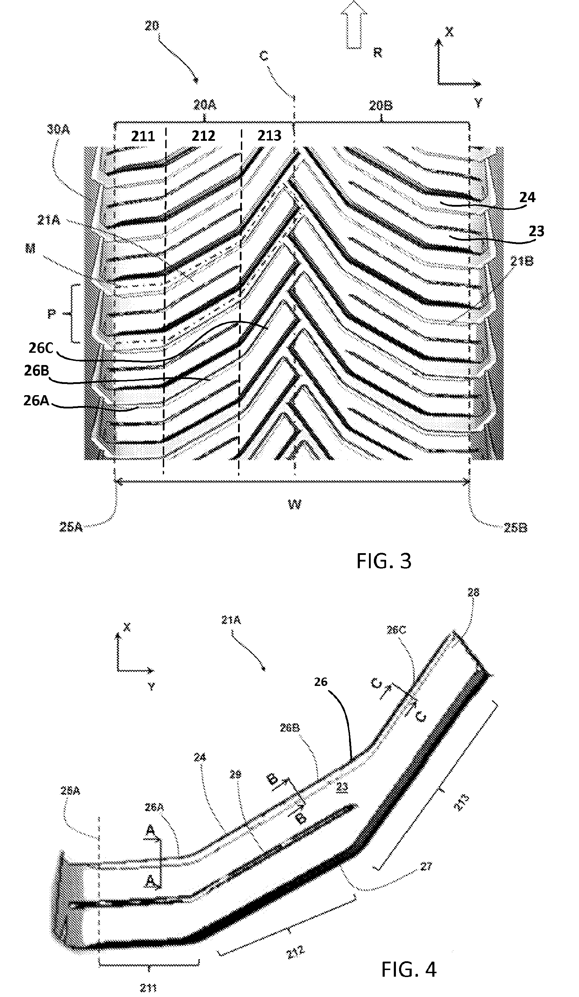

La figure 3 est une vue de détail partielle d'une bande de roulement 20 selon l'invention. La bande de roulement 20 est ici à l'état neuf. Cette bande de roulement 20 comprend deux parties de bande de roulement 20A, 20B de largeur sensiblement identique W/2. Chaque partie de bande de roulement 20A, 20B comprend respectivement une pluralité d'ensembles de blocs 21A, 21B. Les ensembles de blocs se succèdent selon une direction circonférentielle. Plus particulièrement, un ensemble de blocs appartient à un motif M de pas P. Ce motif M est répété n fois sur la circonférence du pneumatique. Cette répétition peut se faire à iso-dimension. La bande de roulement est dite alors monopas. En variante, cette répétition peut se faire avec différents coefficients d'agrandissement. La bande de roulement est dite alors multipas.

Chaque ensemble de blocs 21A, 21B s'étend respectivement d'un des bords 25A, 25B de la bande de roulement 20 jusqu'à l'axe central C selon une courbure non nulle. L'axe central C comprend ainsi une alternance de blocs 21A, 21B ayant respectivement comme origine les bords 25A, 25B de la bande de roulement 20. La bande de roulement 20 est dite ici directionnelle, c'est-à-dire que les blocs 21A, 21B sont spécifiquement agencés pour optimiser les caractéristiques comportementales du pneumatique en fonction d'un sens de rotation prédéterminé. Ce sens de rotation est classiquement indiqué par une flèche sur le flanc du pneumatique (flèche notée R sur la figure 3).

Dans le mode de réalisation de la figure 3, chaque ensemble de bloc(s) 21A, 21B comprend un seul bloc. En variante, l'ensemble de blocs peut comprendre un nombre de blocs supérieur ou égal à 2. Dans chaque ensemble de blocs, les blocs sont alors séparés par au moins une rainure. Cette rainure s'étend selon une direction axiale ou selon une direction oblique ayant à la fois une composante non nulle selon la direction circonférentielle et une composante non nulle selon la direction axiale.

On notera que les blocs ont une hauteur maximale au moins égale à 5,5 mm et au plus égale à 9 mm. Préférentiellement, la hauteur maximale des blocs est au plus égale à 7,5 mm. Cette hauteur maximale est mesurée pour les blocs au niveau de l'axe central C. Elle correspond à la distance entre une surface de roulement 23 de la bande de roulement et une surface de fond 24. La hauteur maximale d'un bloc correspond à la profondeur maximale des rainures qui délimitent ce bloc.

Par « surface de roulement » 23 de bande de roulement 20, on entend la surface qui regroupe l'ensemble des points du pneumatique qui vont entrer en contact avec un sol dans des conditions usuelles de roulage. Ces points qui vont entrer en contact avec le sol appartiennent aux faces de contact des blocs. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et à son code vitesse. Ces conditions d'utilisation peuvent aussi être dites « conditions nominales » ou « conditions d'usage ».

Par « surface de fond » 24, on entend une surface théorique qui passe par les points radialement intérieurs des rainures de la bande de roulement 20. Elle délimite ainsi la frontière entre la bande de roulement 20 et la carcasse 40 du pneumatique. Cette surface de fond 24 s'étend entre un premier bord 25A et un second bord 25B de la bande de roulement 20.

Pour rappel, par « bord » 25A, 25B de la bande de roulement 20 on entend les limitent respectives entre la bande de roulement 20 et les flancs 30A, 30B. Ces deux bords 25A, 25B sont distants entre eux de la valeur W correspondant à la largeur de la bande de roulement 20. Ces deux bords 25A, 25B sont situés à une même distance par rapport à l'axe central C.

On notera également qu'une certification hiver 3PMSF est indiqué sur au moins un des flancs 30A, 30B du pneumatique.

La figure 4 est une vue agrandie de l'ensemble de blocs 21A de la figure 3. Cet ensemble de blocs 21A est délimité par une surface de contact 23, une surface de fond 24 et des faces latérales 26, 27, 28. Parmi ces faces latérales, on distingue une face d'attaque 26, une face de fuite 27 et une face centrale 28. La surface de contact 23, la surface de fond 24, la face d'attaque 26, la face de fuite 27, la face centrale 28 et le bord 25A délimitent le volume total VT de matière caoutchoutique contenu dans l'ensemble de blocs 21A.

Une méthode pour la détermination du volume total VT de matière caoutchoutique contenu dans l'ensemble de blocs 21A consisterait à utiliser pleinement les possibilités des scanners 3D adaptés pour numériser directement le volume d'un objet complexe. Un tel exemple de scanner est par exemple la machine de mesure TMM-570 de la société WOLF & BECK utilisant une sonde laser.

L'ensemble de blocs 21A est ici divisé principalement en trois zones, comprenant une zone de bord 211, une zone intermédiaire 212 prolongeant la partie de bord 211, une zone centrale 213 prolongeant la zone intermédiaire 212. Chacune des zones de l'ensemble de blocs 21A a ici une direction d'extension principale qui lui est propre. Ainsi, la zone de bord 211 a une direction d'extension principale globalement parallèle à la direction axiale Y. La zone centrale 213 est fortement inclinée par rapport à la direction axiale Y et la zone intermédiaire 212 a une inclinaison comprise entre l'inclinaison de la zone de bord 211 et l'inclinaison de la zone centrale 213. L'ensemble de blocs 21A présente alors globalement une courbure non nulle.

Chaque ensemble de blocs 21A comporte un ensemble de chanfreins 26A, 26B, 26C. Cet ensemble de chanfreins comprend ici un chanfrein de bord 26A s'étendant sur la zone de bord 211, un chanfrein intermédiaire 26B s'étendant sur la zone intermédiaire 212 et un chanfrein central 26C s'étendant sur la zone centrale 213. Le chanfrein de bord 26A, le chanfrein intermédiaire 26B et le chanfrein central 26C se suivent selon la direction axiale et ils s'étendent sur la face d'attaque de l'ensemble de blocs. Le chanfrein de bord 26A, le chanfrein intermédiaire 26B et le chanfrein central 26C présentent respectivement une largeur LC1, LC2, LC3. Par largeur de chanfrein, on entend la largeur moyenne de ce chanfrein dans la zone de l'ensemble de blocs choisie. Ces largeurs LC1, LC2, LC3 sont comprises entre 0,5 mm et 2,5 mm.

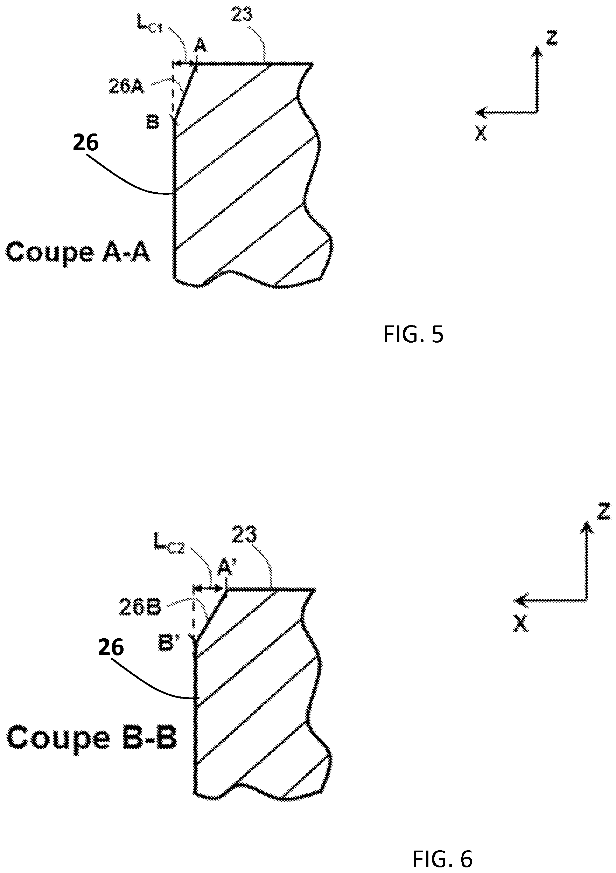

La figure 5 illustre une vue en coupe de l'ensemble de blocs 21A de la figure 4 selon un plan de coupe A-A dans la zone de bord 211 au niveau du chanfrein de bord 26A. Le chanfrein de bord 26A forme un plan incliné qui s'étend entre un premier point A et un second point B. Le premier point A correspond à l'intersection entre le chanfrein de bord 26A et la surface de roulement 23 de la bande de roulement. Le second point B correspond à l'intersection entre le chanfrein de bord 26A et une paroi latérale délimitant la zone de bord 211. Le chanfrein de bord 26A est défini par une hauteur, une largeur et par un angle d'inclinaison mesuré par rapport à la direction circonférentielle X. La hauteur du chanfrein de bord 26A correspond à la distance entre le premier point A et le second point B selon une projection radiale, c'est-à-dire selon une projection sur l'axe Z. La hauteur du chanfrein de bord 26A est ici comprise entre 0,5 et 1mm. La largeur LC1 du chanfrein de bord 26A correspond à la distance entre le premier point A et le second point B selon une projection circonférentielle, c'est-à-dire selon une projection sur l'axe X. Comme il a déjà été indiqué, la largeur LC1 du chanfrein de bord 26A est ici comprise entre 1,5 et 2 mm. L'angle d'inclinaison du chanfrein de bord 26A est compris entre 30 degrés et 50 degrés par rapport à la direction circonférentielle X.

La figure 6 illustre une vue en coupe de l'ensemble de blocs 21A de la figure 4 selon un plan de coupe B-B dans la zone intermédiaire 212 au niveau du chanfrein intermédiaire 26B. Le chanfrein intermédiaire 26B forme un plan incliné qui s'étend entre un premier point A' et un second point B'. Le premier point A' correspond à l'intersection entre le chanfrein intermédiaire 26B et la surface de roulement 23 de la bande de roulement. Le second point B' correspond à l'intersection entre le chanfrein intermédiaire 26B et une paroi latérale délimitant la zone intermédiaire 212. Le chanfrein intermédiaire 26B est défini par une hauteur, une largeur et par un angle d'inclinaison mesuré par rapport à la direction circonférentielle X. La hauteur du chanfrein intermédiaire 26B correspond à la distance entre le premier point A' et le second point B' selon une projection radiale, c'est-à-dire selon une projection sur l'axe Z. La hauteur du chanfrein intermédiaire 26B est ici comprise entre 0,5 et 1mm. La largeur LC2 du chanfrein intermédiaire 26B correspond à la distance entre le premier point A' et le second point B' selon une projection circonférentielle, c'est-à-dire selon une projection sur l'axe X. Comme il a déjà été indiqué, la largeur LC2 du chanfrein intermédiaire 26B est ici comprise entre 1,5 et 2 mm. L'angle d'inclinaison du chanfrein intermédiaire 26B est compris entre 30 degrés et 50 degrés par rapport à la direction circonférentielle X.

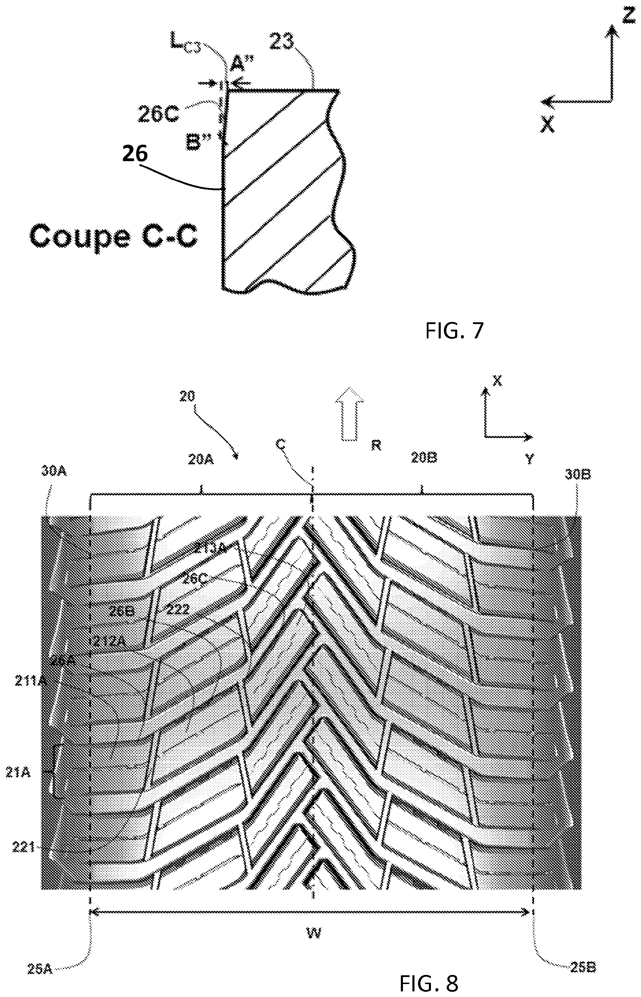

La figure 7 illustre une vue en coupe de l'ensemble de blocs 21A de la figure 4 selon un plan de coupe C-C dans la zone centrale 213 au niveau du chanfrein central 26C. Le chanfrein central 26C forme un plan incliné qui s'étend entre un premier point A" et un second point B". Le premier point A" correspond à l'intersection entre le chanfrein central 26C et la surface de roulement 23 de la bande de roulement. Le second point B" correspond à l'intersection entre le chanfrein central 26C et une paroi latérale délimitant la zone centrale 213. Le chanfrein central 26C est défini par une hauteur, une largeur et par un angle d'inclinaison mesuré par rapport à la direction circonférentielle X. La hauteur du chanfrein central 26C correspond à la distance entre le premier point A" et le second point B" selon une projection radiale, c'est-à-dire selon une projection sur l'axe Z. La hauteur du chanfrein central 26C est ici comprise entre 0,5 et 1mm. La largeur LC3 du chanfrein central 26C correspond à la distance entre le premier point A" et le second point B" selon une projection circonférentielle, c'est-à-dire selon une projection sur l'axe X. Comme il a déjà été indiqué, la largeur LC3 du chanfrein central 26C est ici comprise entre 1,5 et 2 mm. L'angle d'inclinaison du chanfrein central 26C est compris entre 30 degrés et 50 degrés par rapport à la direction circonférentielle X.

Préférentiellement, la largeur LC2 du chanfrein intermédiaire 26B sur la zone intermédiaire 212 est différente de la largeur LC1 du chanfrein de bord 26A sur la zone de bord 211. Avantageusement, la différence de largeur LC2-LC1 de l'ensemble de chanfreins entre la zone intermédiaire 212 et la zone de bord 211 est d'au moins 0,3 mm.

Dans le mode de réalisation illustré aux figures 5 à 7, la largeur LC2 du chanfrein intermédiaire 26B est supérieure à la largeur LC1 du chanfrein de bord 26A dans la zone de bord 211 et à la largeur LC3 du chanfrein central 26C dans la zone centrale 213.

Sur la figure 4, le chanfrein de bord 26A, le chanfrein intermédiaire 26B et le chanfrein central 26C s'étendent au niveau d'une face d'attaque de l'ensemble de blocs 21A. Ledit ensemble de blocs 21A comprend également une face de fuite. Un autre ensemble de chanfreins s'étend sur ladite face de fuite. Préférentiellement, l'autre ensemble de chanfreins a une largeur constante sur l'ensemble du bloc 21A.

Sur la figure 4, l'ensemble de blocs 21A comprend une incision 29 s'étendant dans la longueur dudit ensemble de blocs 21A. Préférentiellement, l'incision 29 est au moins en partie chanfreinée.

La figure 8 illustre un second mode de réalisation dans lequel l'ensemble de blocs 21A comprend trois blocs 211A, 212A, 213A. Le premier bloc 211A dit bloc de bord est disposé à proximité du bord 25A de la bande de roulement. Un second bloc 212A dit bloc intermédiaire est disposé dans le prolongement du bloc de bord 211A. Un troisième bloc 213A dit bloc central est disposé dans le prolongement du bloc intermédiaire 212A. Le bloc intermédiaire 212A est donc placé entre le bloc de bord 211A et le bloc central 213A. Le bloc de bord 211A est séparé du bloc intermédiaire 212A par une première rainure 221. Le bloc intermédiaire 212A est séparé du bloc central 213A par une seconde rainure 222. La première rainure 221 et la seconde rainure 222 s'étendent ici principalement selon une direction oblique. Cette direction oblique présente à la fois une composante selon la direction circonférentielle X et une composante selon la direction axiale Y. En variante, la première rainure 221 et/ou la seconde rainure 222 s'étende(nt) uniquement selon la direction circonférentielle X. De plus, le bloc de bord 211A comprend ici un chanfrein de bord 26A de largeur LC1. Le bloc intermédiaire 212A comprend un chanfrein intermédiaire 26B de largeur LC2. Le bloc central 213A comprend un chanfrein central 26C de largeur LC3.

La largeur LC1 du chanfrein de bord est différente de la largeur LC2 du chanfrein intermédiaire et la largeur LC3 du chanfrein central est différente de la largeur LC2 du chanfrein intermédiaire. Les largeurs LC1, LC2, LC3 sont comprises entre 0,5 mm et 2,5 mm et la largeur LC2 de l'ensemble de chanfreins dans la zone intermédiaire est supérieure à la largeur LC1 de l'ensemble de chanfreins dans la zone de bord et à la largeur LC3 de l'ensemble de chanfreins dans la zone centrale.

Pour le mode de réalisation illustré aux figures 1 à 8, chaque ensemble de blocs 21A est formé à partir d'un matériau caoutchoutique. Dans un mode de réalisation préférentiel, la composition de ce matériau caoutchoutique a une température de transition vitreuse comprise entre -40°C et -10°C, et préférentiellement entre -35°C et -15°C et un module de cisaillement mesuré à 60°C compris entre 0,5 MPa et 2 MPa, et préférentiellement entre 0,7 MPa et 1,5 MPa.

Dans un mode de réalisation préférentiel, la composition du matériau caoutchoutique des ensembles de blocs est à base d'au moins :
- une matrice élastomère comprenant plus de 50% en masse d'un SBR solution qui porte une fonction silanol et une fonction amine ;
- 20 à 200 pce d'au moins une silice ;
- un agent de couplage pour coupler la silice au SBR solution ;
- 10 à 100 pce d'une résine hydrocarbonée présentant une Tg supérieure à 20°C ;
- 15 à 50 pce d'un plastifiant liquide.

Le SBR solution de ce mode de réalisation préférentiel est un copolymère de styrène et de butadiène préparé en solution. Il a pour caractéristique de porter une fonction silanol et une fonction amine. La fonction silanol du SBR solution portant une fonction silanol et une fonction amine peut par exemple être introduite par hydrosilylation de la chaîne élastomère par un silane portant un groupement alcoxysilane, suivie d'une hydrolyse de la fonction alcoxysilane en fonction silanol. La fonction silanol du SBR solution portant une fonction silanol et une fonction amine peut également être introduite par réaction des chaînes élastomères vivantes avec un composé polysiloxane cyclique tel que décrit dans EP 0 778 311 La fonction amine du SBR solution portant une fonction silanol et une fonction amine peut par exemple être introduite par un amorçage de la polymérisation avec un initiateur portant une telle fonction. Un SBR solution portant une fonction silanol et une fonction amine peut également être préparé par réaction des chaînes élastomères vivantes avec un composé portant une fonction alcoxysilane et une fonction amine selon le mode opératoire décrit dans la demande de brevet EP 2 285 852, suivie d'une hydrolyse de la fonction alcoxysilane en fonction silanol. Selon ce mode de préparation, la fonction silanol et la fonction amine sont préférentiellement situées à l'intérieur de la chaîne du SBR solution, en dehors des extrémités de chaîne. La réaction d'hydrolyse de la fonction alcoxysilane portée par le SBR solution en fonction silanol peut être conduite selon le mode opératoire décrit dans la demande de brevet EP 2 266 819 A1 ou bien par une étape de stripping de la solution contenant le SBR solution. La fonction amine peut être une amine primaire, secondaire ou tertiaire, de préférence tertiaire.

L'invention n'est pas limitée aux modes de réalisation et variantes présentées et d'autres modes de réalisation et variantes apparaîtront clairement à l'homme du métier.

## Revendications

1. Pneumatique comportant une bande de roulement (20) directionnelle, ladite bande de roulement (20) comportant deux bords (25A, 25B) et un centre (C) séparant ladite bande de roulement en deux parties de largeur sensiblement égale, ladite bande de roulement (20) comportant, sur une des deux parties de ladite bande de roulement, une pluralité d'ensembles de bloc(s) (21A, 21B), chaque ensemble de bloc(s) (21A, 21B) comportant au moins un bloc, chaque ensemble de bloc(s) (21A, 21B) s'étendant d'un des bords (25A, 25B) de la bande de roulement vers le centre (C) de ladite bande de roulement (20) selon une courbure non nulle, chaque ensemble de bloc(s) (21A, 21B) comportant une zone de bord (211) à proximité d'un bord de la bande de roulement, une zone centrale (213) à proximité du centre de ladite bande de roulement et une zone intermédiaire (212) entre la zone de bord (211) et la zone centrale (213), chaque ensemble de bloc(s) (21A, 21B) comportant un ensemble de chanfrein(s) (26A, 26B, 26C) comprenant au moins un chanfrein, ledit ensemble de chanfrein(s) (26A, 26B, 26C) s'étendant sur la zone de bord (211) et la zone intermédiaire (212) de l'ensemble de bloc(s) (21A, 21B), **caractérisé en ce que** ledit ensemble de chanfrein(s) (26A, 26B, 26C) s'étend sur la zone centrale (213) de l'ensemble de bloc(s) (21A, 21B), le ou chaque chanfrein (26A, 26B, 26C) formant un plan incliné s'étendant entre un premier point (A, A', A") correspondant à l'intersection entre le chanfrein et une surface de roulement (23) du pneumatique et un second point (B, B', B") correspondant à l'intersection entre le chanfrein et une paroi latérale délimitant la zone de bord (211), la zone centrale (213) et la zone intermédiaire (212) de l'ensemble de bloc(s) (21A, 21B), **en ce que** le pneumatique a une certification hiver 3PMSF, c'est-à-dire "3 Peak Mountain Snow Flake", ladite certification étant indiquée sur un flanc (30A) du pneumatique et **en ce que** la largeur LC1 de l'ensemble de chanfrein(s) (26A, 26B, 26C) sur la zone de bord (211) est différente de la largeur LC2 de l'ensemble de chanfrein(s) (26A, 26B, 26C) sur la zone intermédiaire (212), lesdites largeurs LC1 et LC2 étant comprises entre 0,5 mm et 2,5 mm, la largeur du chanfrein correspondant à la distance entre le point le plus radialement extérieur du chanfrein et le point le plus radialement intérieur de ce chanfrein dans la rainure, projetée sur la surface de roulement de la bande de roulement, mesurée selon la direction circonférentielle.

2. Pneumatique selon la revendication précédente, **dans lequel** la largeur LC2 de l'ensemble de chanfrein(s) (26A, 26B, 26C) sur la zone intermédiaire (212) est supérieure à la largeur LC1 de l'ensemble de chanfrein(s) sur la zone de bord (211).

3. Pneumatique selon l'une quelconque des revendications précédentes, **dans lequel** la différence de largeur LC2-LC1 de l'ensemble de chanfrein(s) (26A, 26B, 26C) entre la zone intermédiaire (212) et la zone de bord (211) est d'au moins 0,3 mm.

4. Pneumatique selon l'une quelconque des revendications précédentes, **dans lequel** ledit ensemble de chanfrein(s) (26A, 26B, 26C) s'étend dans la zone centrale (213) de l'ensemble de bloc(s) (21A, 21B) avec une largeur LC3.

5. Pneumatique selon la revendication précédente, **dans lequel** la largeur LC2 de l'ensemble de chanfrein(s) (26A, 26B, 26C) dans la zone intermédiaire (212) est supérieure à la largeur LC1 de l'ensemble de chanfrein(s) (26A, 26B, 26C) dans la zone de bord (211) et à la largeur LC3 de l'ensemble de chanfrein(s) (26A, 26B, 26C) dans la zone centrale (213).

6. Pneumatique selon l'une quelconque des revendications précédentes, l'ensemble de bloc(s) comprenant une face d'attaque (26) et une face de fuite (27), **dans lequel** ledit ensemble de chanfrein(s) (26A, 26B, 26C) s'étend au niveau de la face d'attaque dudit ensemble de bloc(s) (21A, 21B).

7. Pneumatique selon la revendication précédente, **dans lequel** l'ensemble de bloc(s) (21A, 21B) comprend un autre ensemble de chanfrein(s) s'étendant au niveau de la face de fuite dudit ensemble de bloc(s) (21A, 21B).

8. Pneumatique selon l'une quelconque des revendications précédentes, **dans lequel** l'ensemble de bloc(s) (21A, 21B) comprend une incision (29) s'étendant dans la longueur dudit ensemble de bloc(s) (21A, 21B), ladite incision (29) étant au moins en partie chanfreinée.

9. Pneumatique selon l'une quelconque des revendications précédentes, **dans lequel** l'ensemble de blocs (21A, 21B) comprend au moins trois blocs (211A, 212A, 213A), un premier bloc (211A) dit bloc de bord à proximité du bord (25A) de la bande de roulement, un troisième bloc (213A) dit bloc central à proximité de la zone centrale, et un deuxième bloc (212A) dit bloc intermédiaire disposé entre le bloc de bord (211A) et le bloc central (213A) et dans lequel l'ensemble de blocs (211A, 212A, 213A) comprend un ensemble de chanfreins (26A, 26B, 26C) comprenant au moins trois chanfreins, un premier chanfrein dit chanfrein de bord (26A) de largeur LC1 s'étendant dans le bloc de bord, un second chanfrein dit chanfrein intermédiaire (26B) de largeur LC2 s'étendant dans le bloc intermédiaire (26B), un troisième chanfrein (26C) dit chanfrein central de largeur LC3 s'étendant dans le bloc central (26C), la largeur LC1 du chanfrein de bord (26A) étant différente de la largeur LC2 du chanfrein intermédiaire (26B), et la largeur LC3 du chanfrein central (26C) étant différente de la largeur LC2 du chanfrein intermédiaire (26B), lesdites largeurs LC1, LC2, LC3 étant comprises entre 0,5 mm et 2,5 mm et en ce que la largeur LC2 de l'ensemble de chanfreins (26B) dans la zone intermédiaire (212A) est supérieure à la largeur LC1 de l'ensemble de chanfreins (26A) dans la zone de bord (211A) et à la largeur LC3 de l'ensemble de chanfreins (26C) dans la zone centrale (213A).

10. Pneumatique selon l'une quelconque des revendications précédentes, **dans lequel** la composition du matériau caoutchoutique des blocs a une température de transition vitreuse Tg comprise entre -40°C et -10°C et préférentiellement entre -35°C et -15°C et un module complexe de cisaillement dynamique G* compris entre 0,5 MPa et 2 MPa, et préférentiellement entre 0,7 MPa et 1,5 MPa, les mesures étant réalisées à une température de 60°C selon une sollicitation sinusoïdale en cisaillement simple alterné, ayant une amplitude crête-crête égale à 0,7 MPa et une fréquence égale à 10 Hz.

## Patentansprüche

1. Reifen, der einen richtungsgebundenen Laufstreifen (20) umfasst, wobei der Laufstreifen (20) zwei Ränder (25A, 25B) und eine Mitte (C), die den Laufstreifen in zwei Teile von im Wesentlichen gleicher Breite teilt, umfasst, wobei der Laufstreifen (20) auf einem der beiden Teile des Laufstreifens eine Vielzahl von Anordnungen aus einem oder mehreren Blöcken (21A, 21B) umfasst, wobei jede Anordnung aus einem oder mehreren Blöcken (21A, 21B) mindestens einen Block umfasst, wobei sich jede Anordnung aus einem oder mehreren Blöcken (21A, 21B) mit einer Krümmung ungleich null von einem der Ränder (25A, 25B) des Laufstreifens zu der Mitte (C) des Laufstreifens (20) erstreckt, wobei jede Anordnung aus einem oder mehreren Blöcken (21A, 21B) einen Randbereich (211) in der Nähe eines Rands des Laufstreifens, einen mittleren Bereich (213) in der Nähe der Mitte des Laufstreifens und einen Zwischenbereich (212) zwischen dem Randbereich (211) und dem mittleren Bereich (213) umfasst, wobei jede Anordnung aus einem oder mehreren Blöcken (21A, 21B) eine Anordnung aus einer oder mehreren Fasen (26A, 26B, 26C) umfasst, die mindestens eine Fase beinhaltet, wobei sich die Anordnung aus einer oder mehreren Fasen (26A, 26B, 26C) in dem Randbereich (211) und dem Zwischenbereich (212) der Anordnung aus einem oder mehreren Blöcken (21A, 21B) erstreckt, **dadurch gekennzeichnet, dass** sich die Anordnung aus einer oder mehreren Fasen (26A, 26B, 26C) in dem mittleren Bereich (213) der Anordnung aus einem oder mehreren Blöcken (21A, 21B) erstreckt, wobei die oder jede Fase (26A, 26B, 26C) eine geneigte Ebene bildet, die sich zwischen einem ersten Punkt (A, A', A"), der dem Schnittpunkt zwischen der Fase und einer Lauffläche (23) des Reifens entspricht, und einem zweiten Punkt (B, B', B"), der dem Schnittpunkt zwischen der Fase und einer Seitenwand, die den Randbereich (211), den mittleren Bereich (213) und den Zwischenbereich (212) der Anordnung aus einem oder mehreren Blöcken (21A, 21B) begrenzt, entspricht, erstreckt, dass der Reifen eine Winterzertifizierung 3PMSF, d. h. "3 Peak Mountain Snow Flake", besitzt, wobei die Zertifizierung auf einer Flanke (30A) des Reifens angegeben ist, und dass sich die Breite LC1 der Anordnung aus einer oder mehreren Fasen (26A, 26B, 26C) in dem Randbereich (211) von der Breite LC2 der Anordnung aus einer oder mehreren Fasen (26A, 26B, 26C) in dem Zwischenbereich (212) unterscheidet, wobei die Breiten LC1 und LC2 zwischen 0,5 mm und 2,5 mm betragen, wobei die Breite der Fase dem auf die Lauffläche des Laufstreifens projizierten und entlang der Umfangsrichtung gemessenen Abstand zwischen dem radial äußersten Punkt der Fase und dem radial innersten Punkt dieser Fase in der Rille entspricht.

2. Reifen nach dem vorhergehenden Anspruch, wobei die Breite LC2 der Anordnung aus einer oder mehreren Fasen (26A, 26B, 26C) in dem Zwischenbereich (212) größer ist als die Breite LC1 der Anordnung aus einer oder mehreren Fasen in dem Randbereich (211).

3. Reifen nach einem der vorhergehenden Ansprüche, wobei die Breitendifferenz LC2-LC1 der Anordnung aus einer oder mehreren Fasen (26A, 26B, 26C) zwischen dem Zwischenbereich (212) und dem Randbereich (211) mindestens 0,3 mm beträgt.

4. Reifen nach einem der vorhergehenden Ansprüche, wobei sich die Anordnung aus einer oder mehreren Fasen (26A, 26B, 26C) in dem mittleren Bereich (213) der Anordnung aus einem oder mehreren Blöcken (21A, 21B) mit einer Breite LC3 erstreckt.

5. Reifen nach dem vorhergehenden Anspruch, wobei die Breite LC2 der Anordnung aus einer oder mehreren Fasen (26A, 26B, 26C) in dem Zwischenbereich (212) größer ist als die Breite LC1 der Anordnung aus einer oder mehreren Fasen (26A, 26B, 26C) in dem Randbereich (211) und als die Breite LC3 der Anordnung aus einer oder mehreren Fasen (26A, 26B, 26C) in dem mittleren Bereich (213).

6. Reifen nach einem der vorhergehenden Ansprüche, wobei die Anordnung aus einem oder mehreren Blöcken eine Vorderfläche (26) und eine Hinterfläche (27) beinhaltet, wobei sich die Anordnung aus einer oder mehreren Fasen (26A, 26B, 26C) an der Vorderfläche der Anordnung aus einem oder mehreren Blöcken (21A, 21B) erstreckt.

7. Reifen nach dem vorhergehenden Anspruch, wobei die Anordnung aus einem oder mehreren Blöcken (21A, 21B) eine weitere Anordnung aus einer oder mehreren Fasen beinhaltet, die sich an der Hinterfläche der Anordnung aus einem oder mehreren Blöcken (21A, 21B) erstreckt.

8. Reifen nach einem der vorhergehenden Ansprüche, wobei die Anordnung aus einem oder mehreren Blöcken (21A, 21B) einen Einschnitt (29) beinhaltet, der sich in der Länge der Anordnung aus einem oder mehreren Blöcken (21A, 21B) erstreckt, wobei der Einschnitt (29) mindestens zum Teil gefast ist.

9. Reifen nach einem der vorhergehenden Ansprüche, wobei die Anordnung aus einem oder mehreren Blöcken (21A, 21B) mindestens drei Blöcke (211A, 212A, 213A) beinhaltet, einen ersten Block (211A), Randblock genannt, in der Nähe des Rands (25A) des Laufstreifens, einen dritten Block (213A), mittlerer Block genannt, in der Nähe des mittleren Bereichs und einen zweiten Block (212A), Zwischenblock genannt, der zwischen dem Randblock (211A) und dem mittleren Block (213A) angeordnet ist, und wobei die Anordnung aus einem oder mehreren Blöcken (211A, 212A, 213A) eine Anordnung aus Fasen (26A, 26B, 26C) beinhaltet, die mindestens drei Fasen beinhaltet, wobei sich eine erste Fase, Randfase (26A) genannt, mit einer Breite LC1 in dem Randblock erstreckt, wobei sich eine zweite Fase, Zwischenfase (26B) genannt, mit einer Breite LC2 in dem Zwischenblock (26B) erstreckt, wobei sich eine dritte Fase (26C), mittlere Fase genannt, mit einer Breite LC3 in dem mittleren Block (26C) erstreckt, wobei sich die Breite LC1 der Randfase (26A) von der Breite LC2 der Zwischenfase (26B) unterscheidet und wobei sich die Breite LC3 der mittleren Fase (26C) von der Breite LC2 der Zwischenfase (26B) unterscheidet, wobei die Breiten LC1, LC2, LC3 zwischen 0,5 mm und 2,5 mm betragen, und dadurch, dass die Breite LC2 der Anordnung aus Fasen (26B) in dem Zwischenbereich (212A) größer ist als die Breite LC1 der Anordnung aus Fasen (26A) in dem Randbereich (211A) und als die Breite LC3 der Anordnung aus Fasen (26C) in dem mittleren Bereich (213A).

10. Reifen nach einem der vorhergehenden Ansprüche, wobei die Zusammensetzung des Kautschukmaterials der Blöcke eine Glasübergangstemperatur Tg zwischen -40 °C und -10 °C und bevorzugt zwischen -35 °C und -15 °C und einen komplexen dynamischen Schermodul G* zwischen 0,5 MPa und 2 MPa und bevorzugt zwischen 0,7 MPa und 1,5 MPa aufweist, wobei die Messungen bei einer Temperatur von 60 °C gemäß einer einfachen alternierenden sinusförmigen Scherbeanspruchung mit einer Spitze-Spitze-Amplitude von 0,7 MPa und einer Frequenz von 10 Hz ausgeführt werden.

## Claims

1. Tyre comprising a directional tread (20), said tread (20) comprising two edges (25A, 25B) and a centre (C) dividing said tread into two parts of substantially equal width, said tread (20) comprising, on one of the two parts of said tread, a plurality of sets of block(s) (21A, 21B), each set of block(s) (21A, 21B) comprising at least one block, each set of block(s) (21A, 21B) extending from one of the edges (25A, 25B) of the tread towards the centre (C) of said tread (20) with a non-zero curvature, each set of block(s) (21A, 21B) comprising an edge zone (211) near an edge of the tread, a central zone (213) near the centre of said tread, and an intermediate zone (212) between the edge zone (211) and the central zone (213), each set of block(s) (21A, 21B) comprising a set of chamfer(s) (26A, 26B, 26C) comprising at least one chamfer, said set of chamfer(s) (26A, 26B, 26C) extending over the edge zone (211) and the intermediate zone (212) of the set of block(s) (21A, 21B), **characterized in that** said set of chamfer(s) (26A, 26B, 26C) extends on the central zone (213) of the set of block(s) (21A, 21B), the or each chamfer (26A, 26B, 26C) forming an inclined wall extending from a first point (A, A', A") corresponding to the intersection of the chamfer and a tread surface (23) of the tyre and a second point (B, B', B") corresponding to the intersection of the chamfer and a lateral wall delimiting the edge zone (211), the central zone (213) and the intermediate zone (212) of the set of block(s) (21A, 21B), **in that** the tyre has a 3PMSF winter certification, what is to say "3 Peak Mountain Snow Flake", said certification being indicated on a sidewall (30A) of the tyre and **in that** the width LC1 of the set of chamfer(s) (26A, 26B, 26C) over the edge zone (211) is different from the width LC2 of the set of chamfer(s) (26A, 26B, 26C) over the intermediate zone (212), said widths LC1 and LC2 being comprised between 0.5 mm and 2.5 mm, the width of the chamfer corresponding to the distance between the radially outermost point of the chamfer and the radially innermost point of this chamfer in the groove, projected onto the tread surface of the tread, measured in the circumferential direction.

2. Tyre according to the preceding claim, **wherein** the width LC2 of the set of chamfer(s) (26A, 26B, 26C) over the intermediate zone (212) is greater than the width LC1 of the set of chamfer(s) over the edge zone (211).

3. Tyre according to any one of the preceding claims, **wherein** the difference in width LC2-LC1 of the set of chamfer(s) (26A, 26B, 26C) between the intermediate zone (212) and the edge zone (211) is at least 0.3 mm.

4. Tyre according to any one of the preceding claims, **wherein** said set of chamfer(s) (26A, 26B, 26C) extends in the central zone (213) of the set of block(s) (21A, 21B) with a width LC3.

5. Tyre according to the preceding claim 4, **wherein** the width LC2 of the set of chamfer(s) (26A, 26B, 26C) in the intermediate zone (212) is greater than the width LC1 of the set of chamfer(s) in the edge zone (211) and than the width LC3 of the set of chamfer(s) (26A, 26B, 26C) in the central zone (213).

6. Tyre according to any one of the preceding claims, the set of block(s) comprising a leading-edge face (26) and a trailing-edge face (27), **wherein** said set of chamfer(s) (26A, 26B, 26C) extends at the leading-edge face of said set of block(s) (21A, 21B).

7. Tyre according to the preceding claim, **wherein** the set of block(s) (21A, 21B) comprises another set of chamfer(s) extending at the trailing-edge face of said set of blocks (21A, 21B).

8. Tyre according to any one of the preceding claims, **wherein** the set of block(s) (21A, 21B) comprises a sipe (29) extending along the length of said set of block(s) (21A, 21B), said sipe (29) being at least partially chamfered.

9. Tyre according to any one of the preceding claims, **wherein** the set of blocks (21A, 21B) comprises at least three blocks (211A, 212A, 213A), a first block (211A) referred to as an edge block near the edge (25A) of the tread, a third block (213A) referred to as a central block near the central zone, and a second block (212A) referred to as an intermediate block positioned between the edge block (211A) and the central block (213A) and wherein the set of blocks (211A, 212A, 213A) comprises a set of chamfers (26A, 26B, 26C) comprising at least three chamfers, a first chamfer referred to as an edge chamfer (26A) of width LC1, extending in the edge block, a second chamfer referred to as an intermediate chamfer (26B) of width LC2, extending in the intermediate block (26B), a third chamfer (26C), referred to as a central chamfer, of width LC3, extending in the central block (26C), the width LC1 of the edge chamfer (26A) being different from the width LC2 of the intermediate chamfer (26B), and the width LC3 of the central chamfer (26C) being different from the width LC2 of the intermediate chamfer (26B), said widths LC1, LC2, LC3 being comprised between 0.5 mm and 2.5 mm, and in that the width LC2 of the set of chamfers (26B) in the intermediate zone (212A) is greater than the width LC1 of the set of chamfers (26A) in the edge zone (211A) and than the width LC3 of the set of chamfers (26C) in the central zone (213A).

10. Tyre according to any one of the preceding claims, **wherein** the composition of the rubbery material of the blocks has a glass transition temperature Tg comprised between -40°C and -10°C and preferably between -35°C and -15°C and a complex dynamic shear modulus G* comprised between 0.5 MPa and 2 MPa, and preferably between 0.7 MPa and 1.5 MPa, the measurements being taken at a temperature of 60°C under simple alternating sinusoidal shear stress with a peak-to-peak amplitude equal to 0.7 MPa and a frequency equal to 10 Hz.
